# EUROPÄISCHE PATENTSCHRIFT

(11) **EP 1 253 350 B1**
(45) Veröffentlichungstag und Bekanntmachung des Hinweises auf die Patenterteilung: **24.08.2005**
(21) Anmeldenummer: 02007624.6
(22) Anmeldetag: 04.04.2002
(51) Int. Cl.: F16H 37/08, F16H 101/04

(54) **Wechselgetriebe-Anordnung mit einem stufenlosen Toroidgetriebe und einem Planetenräder-Summengetriebe**
Transmission arrangement with toroid transmission and planetary adding transmission
Ensemble transmission avec transmission toroidale et transmission planétaire d'adjonction

(30) Priorität: 28.04.2001 DE 10121042
(43) Veröffentlichungstag der Anmeldung: 30.10.2002
(73) Patentinhaber: DaimlerChrysler AG, 70567 Stuttgart (DE)
(72) Erfinder: Henzler, Steffen, 73560 Böbingen/Rems (DE); Feuchter, Harald, 70771 Leinfelden-Echterdingen (DE)

(56) Entgegenhaltungen:
- EP-A- 0 942 199
- GB-A- 1 094 002
- US-A- 6 045 477
- US-A- 6 155 951
- US-B1- 6 171 210

## Beschreibung

Die Erfindung betrifft eine Wechselgetriebe-Anordnung nach dem Patentanspruch 1 der vorliegenden Patentanmeldung.

Bei einer bekannten Wechselgetriebe-Anordnung (US 6,059,685) ist an dem über die zentrale Zwischenwelle drehfest zur Eingangswelle angeordneten doppelstegigen Planetenträger des Summengetriebes wenigstens ein Doppelplanet gelagert, welcher aus einem mit einem Nebenplaneten kämmenden Hauptplaneten besteht. Das nach dem Zwei-Kammer-Prinzip gestaltete Toroidgetriebe ist durch seine eine zentrale Antriebsscheibe mit der Eingangswelle, durch seine andere zentrale Antriebsscheibe mit dem Planetenträger und durch seine mittleren zentralen Abtriebsscheiben mit der konzentrischen Zwischenwelle verbunden, welch letztere wiederum mit dem einen von zwei mit dem Hauptplaneten kämmenden inneren Zentralrädern des Summengetriebes drehfest verbunden ist. Der Nebenplanet kämmt mit einem äußeren Zentralrad, welches durch die erste Schaltkupplung für den unteren Fahrbereich bei niedrigeren Fahrgeschwindigkeiten mit der Ausgangswelle in Antriebsverbindung bringbar ist. Das andere mit dem Hauptplaneten kämmende innere Zentralrad kann durch die zweite Schaltkupplung für den oberen Fahrbereich bei höheren Fahrgeschwindigkeiten mit der Ausgangswelle in Antriebsverbindung gebracht werden.
Diese bekannte Wechselgetriebe-Anordnung ist in ihrer Übersetzung bereits mit einer sogenannten geared-neutral-Funktion ausgelegt, durch welche im eingerückten Zustand der ersten Schaltkupplung für den unteren Fahrbereich die Drehzahl der drehfest angebundenen Getriebeglieder (äußeres Zentralrad des Summengetriebes und Ausgangswelle) gleich Null ist, wenn die Teilübersetzung des Toroidgetriebes auf einen von den jeweiligen Zähnezahlen des Summengetriebes abhängigen negativen Absolutwert kleiner 1 eingestellt ist. Auf diese Weise ist für den Anfahrvorgang eine besondere Antriebskomponente, wie bspw. Anfahrwandler oder -kupplung, nicht erforderlich.
Bei dieser bekannten Wechselgetriebe-Anordnung ist weiterhin eine als sogenannter Synchron-Punkt bezeichnete Übersetzung einsteuerbar, bei welcher die mit der ersten Schaltkupplung verbundenen Getriebeglieder einerseits sowie die mit der zweiten Schaltkupplung verbundenen Getriebeglieder andererseits jeweils gleiche Drehzahl aufweisen, so daß ein Wechsel des Drehmomentpfades von der einen auf die andere Kupplung - mithin der Übergang von dem einen auf den anderen Fahrbereich - ruckfrei, d.h. für den Fahrer nicht spürbar, vollzogen werden kann.
Aufgrund der beschriebenen Getriebekonfiguration der bekannten Wechselgetriebe-Anordnung weist bei letzterer das mit der ersten Schaltkupplung für den unteren Fahrbereich verbundene äußere Zentralrad des Summengetriebes zwangsläufig einen gegenüber dem Drehsinn der Eingangswelle entgegengesetzten Drehsinn auf, so daß ein Rückwärtsfahrbereich mit einem geeigneten Übersetzungsverhältnis möglich ist, wenn die erste Schaltkupplung eingerückt und im Toroidgetriebe eine von den jeweiligen Zähnezahlen im Summengetriebe abhängige negative Teilübersetzung mit einem Absolutwert kleiner 1 eingestellt wird.

Bei einer mit einem stufenlosen Toroidgetriebe arbeitenden bekannten Wechselgetriebe-Anordnung anderer Art (EP 0 942 199 A2) ist ein gattungsgemäßes Planetenräder-Summengetriebe nicht - aber eine exzentrisch außerhalb des Toroidgetriebes und parallel zur Eingangswelle angeordnete Vorgelegewelle verwendet, welche durch je einen Achsversatztrieb einerseits direkt mit den beiden zentralen Abtriebsscheiben des nach dem Zwei-Kammer-Prinzip ausgebildeten Toroidgetriebes und andererseits über ein erstes Schaltelement in Form einer Bereichskupplung für Vorwärtsfahrt mit der zur Eingangswelle koaxialen Ausgangswelle verbunden ist. Um den für die Drehmoment-Übertragung notwendigen Reibschluß zwischen dem jeweiligem Roller und den toroidalen Reibflächen der zugehörigen Antriebs- bzw. Abtriebsscheibe im Toroidgetriebe zu erzeugen, ist die eine, erste Antriebsscheibe mit der über ein Anfahrelement in Form eines Drehmomentwandlers anzutreibenden Eingangswelle durch eine drehmomentabhängige Anpreßvorrichtung verbunden, deren wälzkörperartige Zwischenglieder mit Neigungsflächen in Eingriff stehen, welche an einer oder beiden Vorrichtungshälften ausgebildet sind. Die andere, zweite Antriebsscheibe steht mit der Eingangswelle entweder in drehfester, also direkter - oder über die Anpreßvorrichtung der ersten Antriebsscheibe in mittelbarer drehmomentabhängiger Antriebsverbindung. Im Kraftfluß zwischen der zweiten Antriebsscheibe des Toroidgetriebes und der koaxialen Ausgangswelle ist ein einfaches Planetenräder-Umkehrgetriebe für die Bildung eines Rückwärtsganges angeordnet, von dem das innere Zentralrad mit der zweiten Antriebsscheibe und das äußere Zentralrad mit der Ausgangswelle jeweils drehfest sowie der Planetenträger durch ein zweites Schaltelement in Form einer Rückwärtsgang-Bremse mit einem nichtdrehenden Gehäuseteil und durch ein drittes Schaltelement in Form einer Direktgang-Kupplung mit dem äußeren Zentralrad verbunden ist. Die Getriebesteuerung ist so konzipiert, daß von den drei Schaltelementen jeweils nur eines aktiviert sein kann, während hierbei die beiden anderen zwangsläufig deaktiviert bleiben. Dadurch sind drei Getriebezustände definiert, von denen in einem ersten Getriebezustand durch Aktivierung der Bereichskupplung für Vorwärtsfahrt die gesamte Antriebsleistung über das Toroidgetriebe unter Umgehung des Umkehrgetriebes zur Ausgangswelle geleitet und in einem zweiten Getriebezustand durch Aktivierung der Direktgang-Kupplung die gesamte Antriebsleistung von der Eingangswelle unter Umgehung des Toroidgetriebes auf die Ausgangswelle über das als Block umlaufende Umkehrgetriebe übertragen wird, während in einem dritten Getriebezustand durch Aktivierung der Rückwärtsgang-Kupplung die gesamte Antriebsleistung von der Eingangswelle unter Umgehung des Toroidgetriebes zur Ausgangswelle über das in seine Rückwärtsgang-Übersetzung geschaltete Umkehrgetriebe fließt. Zwar ist das Toroidgetriebe sowohl im Direktgang als auch im Rückwärtsgang unbelastet - jedoch in dem variabel übersetzten Vorwärtsfahrt-Bereich mit der vollen Antriebsleistung beaufschlagt, weil ein Betrieb mit Leistungsteilung und Unterteilung in wenigstens zwei Untersetzungsbereiche wegen des Fehlens eines Summengetriebes nicht möglich ist. Im übrigen ist eine Wechselgetriebe-Anordnung dieser anderen Art mit einem Drehmomentwandler und einer sperrigen äußeren Vorgelegewelle nicht ohne weiteres in einem Getriebetunnel eines herkömmlichen Fahrzeuges unterzubringen.

In der DE 199 11 297 A1 ist für eine Wechselgetriebe-Anordnung einer weiteren anderen Art mit einem stufenlosen ein- oder mehrflutigen Reibradgetriebe mit gegensinnig angeordneten kegelartigen Reibrädern, die sich direkt oder über einen zylinderartigen Hohlkörper aufeinander abwälzen, angegeben, daß die Änderung des Übersetzungsverhältnisses dadurch erfolge, daß die Achsen der Reibräder zueinander mehr oder weniger stark gekippt und sich unter verschiedenen Winkeln schneiden würden. Für diese Wechselgetriebe-Anordnung anderer Art wird ein maximaler Wirkungsgrad in den wichtigen Betriebsbereichen und insbesondere auch in den verbrauchswirksamen längeren Gängen geltend gemacht und darauf verwiesen, daß diese zugleich leistungsstark und hervorragend verstellbar sei. Diese Vorteile sollen dadurch erreicht sein, daß das Bohrwälzverhältnis in für den Gesamtverbrauch wichtigen Betriebsbereichen kleiner ist als in den anderen Betriebsbereichen, indem der Kegelwinkel der jeweiligen Wälzbahnen geringer ist als bei den übrigen Wälzbahnen. Zusätzlich oder alternativ zu dieser Auslegung des Bohrwälzverhältnisses soll bei dieser Wechselgetrieb-Anordnung anderer Art das kraftschlüssige Reibradgetriebe in dem für den Gesamtverbrauch wichtigsten Gang durch einen schaltbaren direkten Durchtrieb oder eine schaltbare, direkt auf das Differential wirkende Zahnradstufe zu umgehen sein.

Bei der Wechselgetriebe-Anordnung nach der Erfindung ist die Eingangswelle unter Umgehung des Toroidgetriebes durch eine dritte Schaltkupplung mit der Ausgangswelle in Antriebsverbindung bringbar, so daß ein stufenloses Fahrzeuggetriebe mit einem aufgrund des durch diese zusätztliche Schaltkupplung bedarfsweise einsteuerbaren konstanten Gesamt-Übersetzungsverhältnisses erzielten hohen Wirkungsgrad in verbrauchsrelevanten Übersetzungen bei kompakter Bauweise geschaffen ist.

Bei der Wechselgetriebe-Anordnung nach der Erfindung kann das konstante Gesamt-Übersetzungsverhältnis auf den oberen Fahrbereich ausgelegt sein. Beim Wechsel des Drehmomentpfades von der dem konstanten Übersetzungsverhältnis zugehörigen dritten Schaltkupplung auf die den variablen Übersetzungen des oberen Fahrbereiches zugehörige zweite Schaltkupplung können an letzterer die Drehzahlen der angeschlossenen Getriebeglieder durch Anpassung der variablen Teilübersetzung des Toroidgetriebes synchronisiert werden, so daß der Wechsel ruckfrei, d.h. für den Fahrer nicht fühlbar, vonstatten geht.

Bei der Wechselgetriebe-Anordnung nach der Erfindung kann die Getriebesteuerung so ausgelegt sein, daß - wenn der einzuregelnde Sollwert im Bereich der konstanten Gesamt-Übersetzung liegt - ein Vergleich durchgeführt wird, ob der aktuelle Motorbetriebspunkt in Verbindung mit der konstanten Übersetzung zu einem geringeren Kraftstoff-Verbrauch führt. Ist dies der Fall, wird das Getriebe in die konstante Übersetzung gebracht.

Bei der Wechselgetriebe-Anordnung nach der Erfindung kann die Getriebesteuerung desweiteren so ausgelegt sein, daß bei hoher Leistungsanforderung das Getriebe möglichst mit der konstanten Übersetzung betrieben wird. Diese Maßnahme wirkt sich insbesondere bei Beschleunigungsvorgängen und hohen Fahrgeschwindigkeiten vorteilhaft aus.

In der Regel ist eine Wechselgetriebe-Anordnung eines Kraftfahrzeuges mehr als 60% der gesamten Fahrzeit in Übersetzungen kleiner 1 gesteuert. Dementsprechend hoch ist der Einfluß dieser Übersetzungen auf die Lebensdauer insbesondere des Toroidgetriebes. In vielen Fahrsituationen, insbesondere bei Konstantfahrt oder Vollast, wird eine stufenlose Wandlung eigentlich nicht benötigt.
Bei der Wechselgetriebe-Anordnung nach der Erfindung ist es daher günstig, daß der Leistungsfluß über einen Umgehungspfad am Toroidgetriebe vorbei geleitet werden kann, um das Toroidgetriebe nicht unnötig zu schädigen. Durch die Einschaltung der erfindungsgemäßen Konstant-Übersetzung läßt sich die Belastung des Toroidgetriebes in Verbindung mit einer diesbezüglich angepaßten Getriebesteuerung um mehr als 20% reduzieren. Infolge der reduzierten Belastung des Toroidgetriebes ergeben sich bei letzterem Vorteile hinsichtlich Lebensdauer, Baugröße und Wirkungsgrad.

Bei Toroidgetrieben stellt die Geometrie der Reibfläche an dem jeweiligen schwenkbeweglichen Zwischenroller, welcher mit je einer zentralen An- und Abtriebsscheibe in Reibkontakt steht, häufig einen Kompromiß zwischen Lebensdauer und Wirkungsgrad dar. Ein hoher Wirkungsgrad wird bei möglichst kleiner Reib(kontakt)fläche erreicht; umgekehrt erhöht sich die Belastung, da die Kraft auf eine kleinere Fläche wirkt. Infolge der bei der Wechselgetriebe-Anordnung nach der Erfindung erreichten geringeren Belastung des Toroidgetriebes kann die Geometrie derart verändert werden, daß ein höherer Wirkungsgrad erzielt wird.

Infolge des bei der Wechselgetriebe-Anordnung nach der Erfindung erzielten höheren Wirkungsgrades kann die maximal mögliche Fahrzeugendgeschwindigkeit erhöht werden, so daß der Nachteil einer niedrigeren Fahrzeugendgeschwindigkeit bei herkömmlichen stufenlosen Getriebeanordnungen gegenüber den bei Stufengetrieben möglichen höheren Fahrzeugendgeschwindigkeiten nicht mehr gegeben ist.

Bei der Wechselgetriebe-Anordnung nach der Erfindung gemäß Patentanspruch 2 ist die konstante Gesamt-Übersetzung 1:1 und somit als Direktgang ausgelegt.

Dieser Direktgang kann bei der Wechselgetriebe-Anordnung nach der Erfindung durch bauliche Einbindung der diesbezüglichen dritten Schaltkupplung unmittelbar (Patentanspruch 3) oder mittelbar (Patentansprüche 4 bis 7) zwischen Ein- und Ausgangswelle realisiert sein.

Selbst bei der Realisierung des Direktganges bei der Wechselgetriebe-Anordnung nach der Erfindung in der Ausführungsform gemäß Patentanspruch 6, bei welcher noch zwei Zahneingriffe in die Leistungsübertragung eingeschaltet sind, die aber einen Wirkungsgrad höher als 99% aufweisen können, läßt sich für den Direktgang noch ein Gesamt-Wirkungsgrad erzielen, der deutlich über dem der variablen Übersetzungen des oberen Fahrbereiches liegt.

Bei der Wechselgetriebe-Anordnung nach der Erfindung kann gemäß der Lehre von Patentanspruch 8 das konstante Gesamt-Übersetzungsverhältnis für den oberen Fahrbereich ungleich 1 ausgelegt sein, also bspw. overdrive-Charakteristik aufweisen.

Patentanspruch 9 hat eine vorteilhafte Ausführungsform der Wechselgetriebe-Anordnung nach der Erfindung zum Gegenstand, bei der das konstante Gesamt-Übersetzungsverhältnis gleich oder ungleich 1 ausgelegt sein kann.

Patentanspruch 10 hat eine vorteilhafte Weiterbildung der Ausführungsform der Wechselgetriebe-Anordnung nach Patentanspruch 9 zum Gegenstand, bei der das konstante Gesamt-Übersetzungsverhältnis ungleich 1 ausgelegt ist.

Patentanspruch 11 hat eine vorteilhafte Weiterbildung der Ausführungsform der Wechselgetriebe-Anordnung nach Patentanspruch 10 zum Gegenstand, bei der das konstante Gesamt-Übersetzungsverhältnis kleiner 1 ausgelegt ist.

Die Patentansprüche 12 und 13 haben vorteilhafte Weiterbildungen der Ausführungsform der Wechselgetriebe-Anordnung nach der Erfindung mit einem ungleich 1 ausgelegtem Gesamt-Übersetzungsverhältnis zum Gegenstand, bei denen das Teil-Übersetzungsverhältnis im Umkehrgetriebe für den oberen Fahrbereich mit unterschiedlichen Werten kleiner 1 ausgelegt ist.

Bei einer von der Auslegung des Gesamt-Übersetzungsverhältnisses unabhängigen vorteilhaften Ausführungsform der Wechselgetriebe-Anordnung nach der Erfindung gemäß Patentanspruch 14 ist der für die dritte Schaltkuppplung der konstanten Gesamt-Übersetzung erforderliche mechanische Aufwand gering gehalten, weil die Kupplungskomponenten der ersten Schaltkupplung (für den unteren Fahrbereich) und der dritten Schaltkupplung in einer gemeinsamen Baugruppe zusammengefaßt sind, so daß auch der zusätzliche Bedarf an Bauraum auf ein Minimum beschränkt ist.

Die Erfindung ist nachstehend anhand von acht in der Zeichung schematisch dargestellten Ausführungsformen näher beschrieben. In der Zeichnung bedeuten
- Fig.1: einen prinzipiellen Axialschnitt durch die Wechselgetriebe-Anordnung nach der Erfindung gemäß einer ersten Ausführungsform,
- Fig.2: einen prinzipiellen Axialschnitt durch die Wechselgetriebe-Anordnung nach der Erfindung gemäß einer zweiten Ausführungsform,
- Fig.3: einen prinzipiellen Axialschnitt durch die Wechselgetriebe-Anordnung nach der Erfindung gemäß einer dritten Ausführungsform,
- Fig.4: einen prinzipiellen Axialschnitt durch die Wechselgetriebe-Anordnung nach der Erfindung gemäß einer vierten Ausführungsform,
- Fig.5: einen prinzipiellen Axialschnitt durch die Wechselgetriebe-Anordnung nach der Erfindung gemäß einer fünften Ausführungsform,
- Fig.6: einen prinzipiellen Axialschnitt durch die Wechselgetriebe-Anordnung nach der Erfindung gemäß einer sechsten Ausführungsform,
- Fig.7: einen prinzipiellen Axialschnitt durch die Wechselgetriebe-Anordnung nach der Erfindung gemäß einer siebenten Ausführungsform, und
- Fig.8: einen prinzipiellen Axialschnitt durch die Wechselgetriebe-Anordnung nach der Erfindung gemäß einer achten Ausführungsform.

Die acht Ausführungsformen stimmen in folgenden Merkmalen überein:

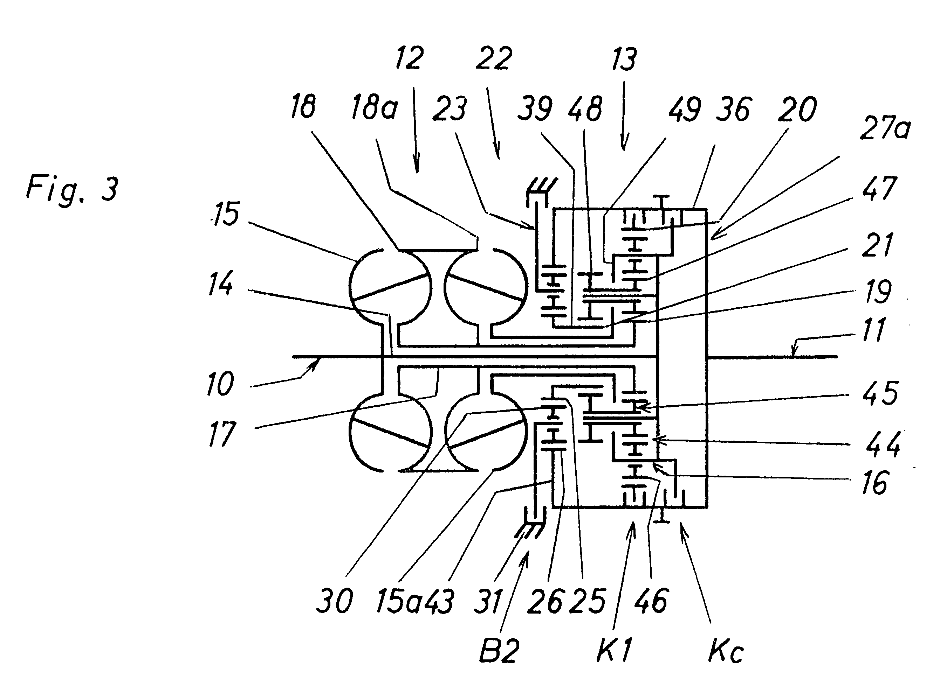

Im Kraftfluß zwischen einer zentralen Eingangswelle 10 und einer koaxialen Ausgangswelle 11 sind ein stufenloses Toroidgetriebe 12, ein Planetenräder-Summengetriebe 13 und ein Planetenräder-Umkehrgetriebe 22 angeordnet. Koaxial und bewegungsfest zur Eingangswelle 10 ist eine zentrale Zwischenwelle 14 vorgesehen, welche mit der einen zentralen Antriebsscheibe 15 des nach dem Zwei-Kammer-Prinzip ausgebildeten Toroidgetriebes 12 sowie mit einem ein erstes Getriebeglied des Summengetriebes 13 bildenden zweistegigen Planetenträger 16 bewegungsfest verbunden ist, wobei letzterer zur Ermöglichung des koaxialen Leistungsdurchganges zusätzlich mit der anderen zentralen Antriebsscheibe 15a des Toroidgetriebes 12 bewegungsfest verbunden ist.
Koaxial zur Eingangswelle 10 und konzentrisch zur zentralen Zwischenwelle 14 ist eine konzentrische Zwischenwelle 17 angeordnet, welche die beiden zentralen Abtriebsscheiben 18,18a des Toroidgetriebes 12 mit einem ein zweites Getriebeglied des Summengetriebes 13 bildenden inneren Zentralrad 19 drehfest verbindet.
Das Summengetriebe 13 weist ein drittes Getriebeglied in Form eines äußeren Zentralrades 20 auf, wobei eine mittelbare oder unmittelbare Antriebsverbindung 27 oder 27a zwischen dem dritten Getriebeglied und der Ausgangswelle 11 durch ein erstes Schaltelement in Form einer Schaltkupplung K1 für einen unteren Fahrbereich mit niedrigeren Fahrgeschwindigkeiten herstellbar ist.
Das Summengetriebe 13 weist ein viertes Getriebeglied in Form eines inneren Zentralrades 21 auf, wobei eine mittelbare Antriebsverbindung 39 zwischen dem vierten Getriebeglied und der Ausgangswelle 11 durch ein zweites Schaltelement in Form einer Schaltkupplung K2 (Schaltbremse B2 in Fig.3) in einem oberen Fahrbereich mit höheren Fahrgeschwindigkeiten herstellbar ist.

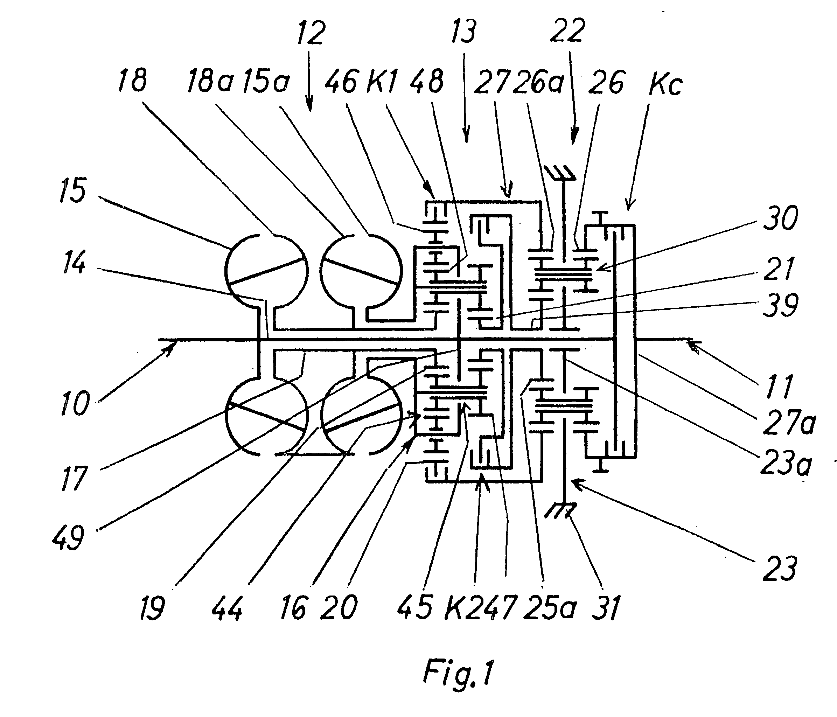

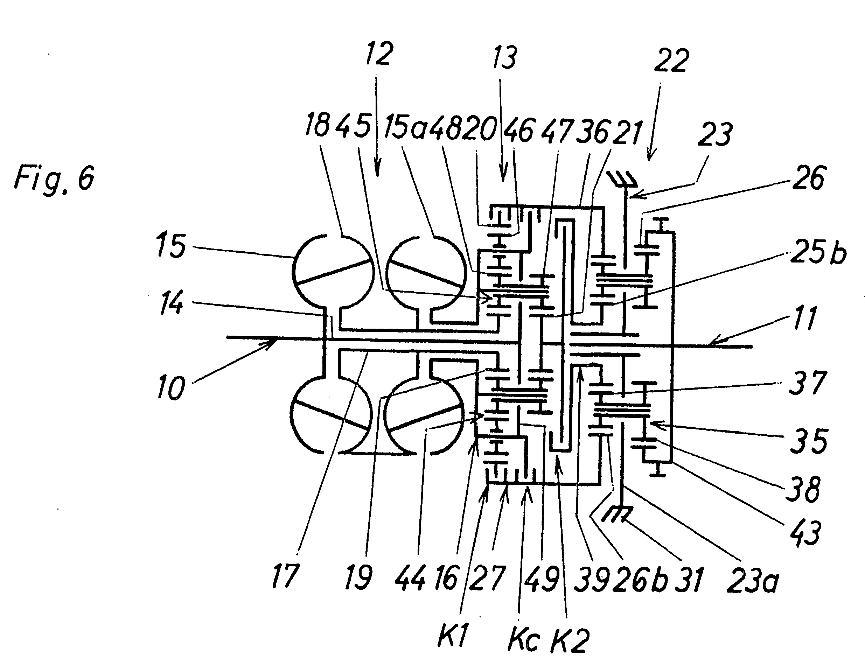

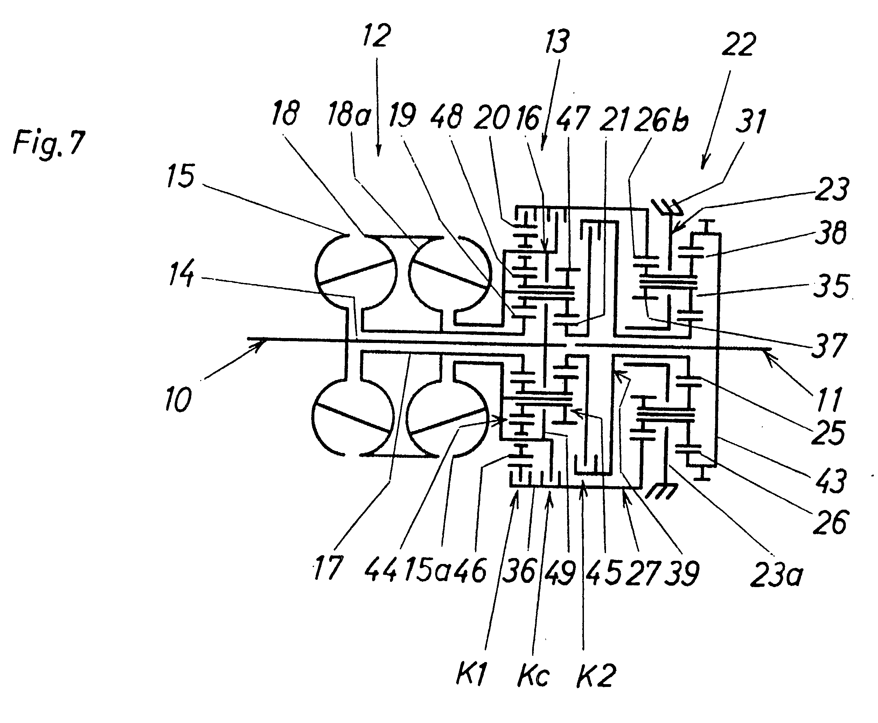

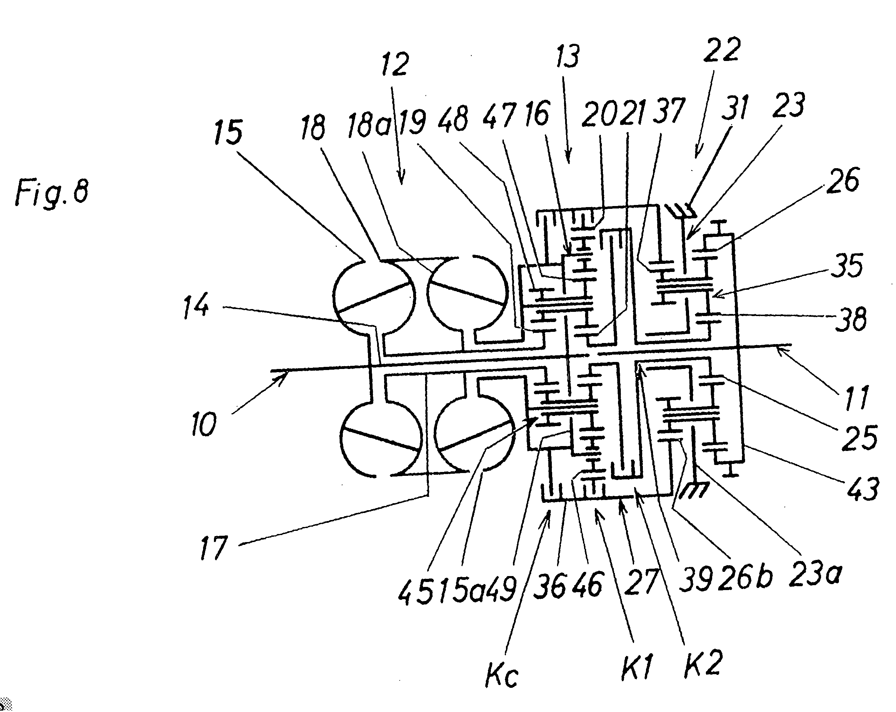

Die Eingangswelle 10 ist unter Umgehung des Toroidgetriebes 12 durch Aktivierung eines dritten Schaltelementes in Form einer Schaltkupplung Kc bei einem konstanten Gesamt-Übersetzungsverhältnis i_{G}=const mit der Ausgangswelle 11 in Antriebsverbindung bringbar, wobei i_{G} bei den Ausführungsformen der Figuren 1 bis 5 gleich 1:1 (also als Direktgang), dagegen bei den Ausführungsformen der Figuren 6 bis 8 kleiner 1 ausgelegt ist.

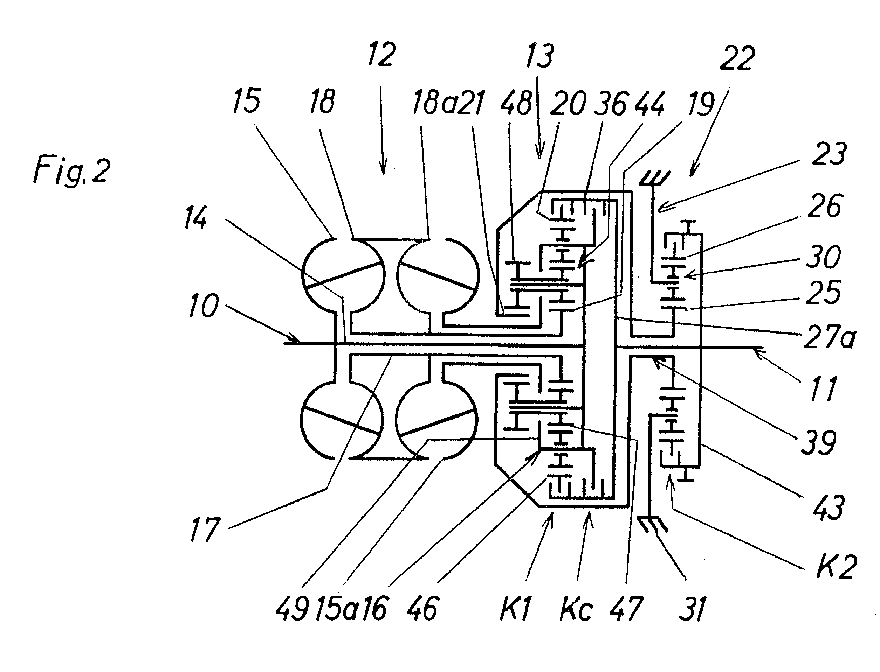

Die Schaltkupplung Kc für den Direktgang ist einerseits mit der zentralen Zwischenwelle 14 bei der Ausführungsform der Figur 1 direkt, dagegen bei den Ausführungsformen der Figuren 2 bis 5 mittelbar über den Planetenträger 16 jeweils drehfest verbunden.

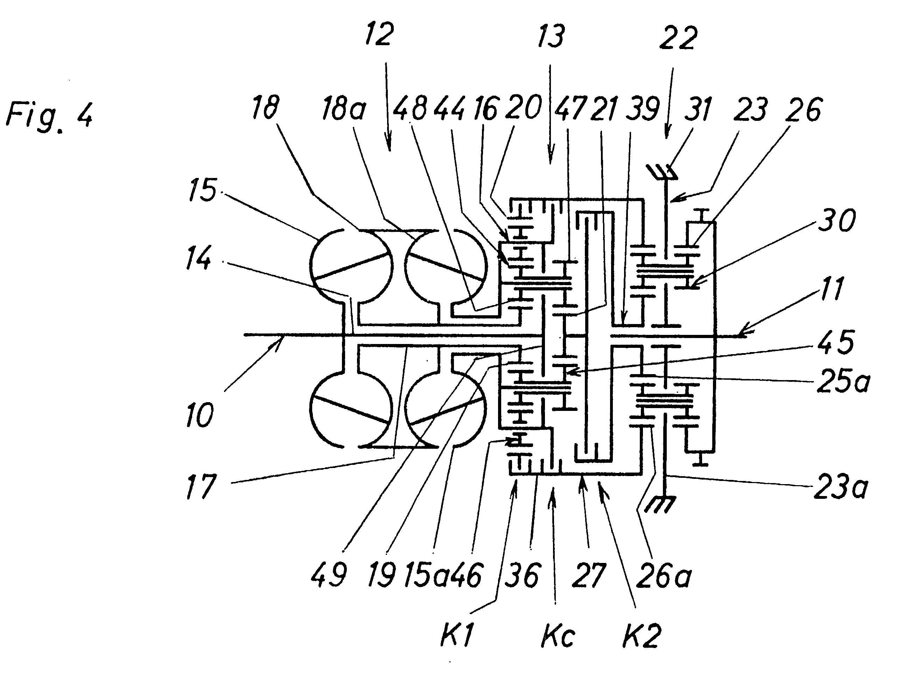

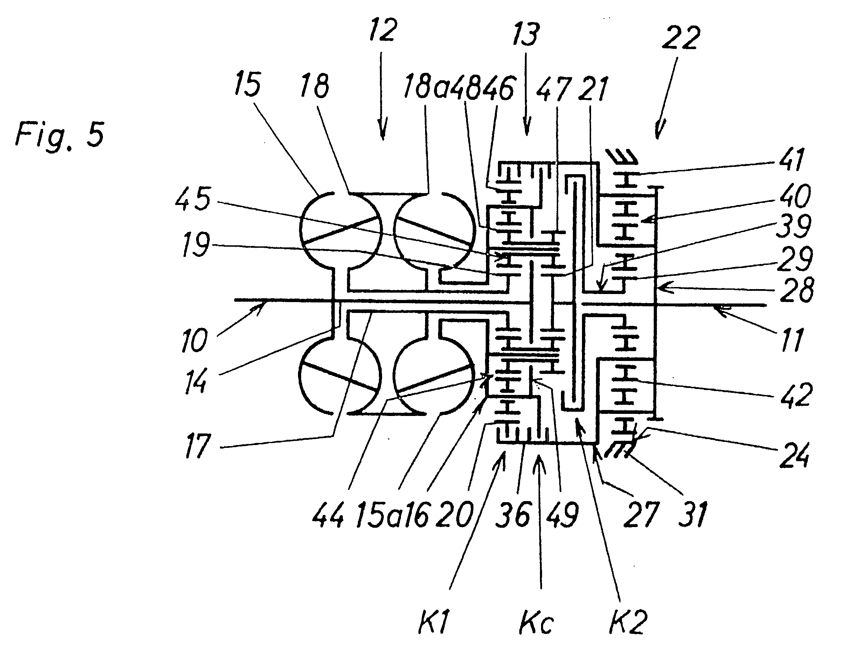

Die Schaltkupplung Kc für den Direktgang ist andererseits mit der Ausgangswelle 11 bei den Ausführungsformen der Figuren 1 bis 3 über einen radialen Antriebssteg 27a direkt verbunden, dagegen bei den Ausführungsformen der Figuren 4 und 5 über das Umkehrgetriebe 22 mittelbar in eine Antriebsverbindung 27 gebracht.

Die Antriebsverbindung 27 ist bei der Ausführungsform der Figur 4 zusätzlich mit der ersten Schaltkupplung K1 verbunden, welche bei der Ausführungsform der Figur 1 ebenfalls durch die das Umkehrgetriebe 22 enthaltende Antriebsverbindung 27 mit der Ausgangswelle 11 gekoppelt ist. Daher sind die beiden Ausführungsformen übereinstimmend so gestaltet, daß die jeweilige Schaltkupplung K1 mit dem einen (Zentralrad 26a) von zwei äußeren Zentralrädern 26 und 26a des Umkehrgetriebes 22 drehfest verbunden ist, von denen das andere (Zentralrad 26) mit der Ausgangswelle 11 drehfest verbunden ist. Diese Zentralräder 26,26a liegen axial beiderseits eines radialen Abstützsteges 23a des Planetenträgers 23, durch welchen letzterer gegenüber einem nichtdrehenden Gehäuseteil 31 des Getriebegehäuses undrehbar festgelegt ist. Am Planetenträger 23 sind Planeten 30 drehbar gelagert, deren zwei Zahnkränze jeweils mit einem der äußeren Zentralräder 26,26a kämmen, welche gleiche Zähnezahl aufweisen und daher die Übersetzung 1:1 zwischen Eingangswelle 10 und Ausgangswelle 11 zwangsläufig gewährleisten.
Bei der Ausführungsform der Figur 5 ist die Antriebsverbindung 27 so gestaltet, daß eine den Schaltkupplungen K1 und Kc zugeordnete Kupplungstrommel 36 konzentrisch außen zum Summengetriebe 13 und koaxial zur Zwischenwelle 17 angeordnet sowie drehfest mit einem zweistegigen Planetenträger 28 des Umkehrgetriebes 22 verbunden ist. An dem Planetenträger 28 sind Doppelplaneten 40 gelagert, welche aus zwei miteinander kämmenden Einzelplaneten 41,42 bestehen. Der jeweils äußere Einzelplanet 41 kämmt mit einem gegenüber einem nichtdrehenden Gehäuseteil 31 undrehbar festgelegten äußeren Zentralrad 24, während der jeweils innere Einzelplanet 42 mit einem inneren Zentralrad 29 kämmt, welches durch die Antriebsverbindung 39 mit der zweiten Schaltkupplung K2 des Summengetriebes 13 verbunden ist.

Das Umkehrgetriebe 22 ist bei der Ausführungsform der Figur 2 an dem der Ausgangswelle 11 benachbarten hinteren Ende, dagegen bei der Ausführungsform der Figur 3 am vorderen Ende des jeweiligen Summengetriebes 13 baulich angeordnet. In beiden Fällen kämmen jeweils an einem einfachen Planetenträger 23 gelagerte Planeten 30 mit einem inneren Zentralrad 25 und mit einem äußeren Zentralrad 26.
Bei der Ausführungsform der Figur 2 sind der Planetenträger 23 gegenüber einem nichtdrehenden Gehäuseteil 31 undrehbar festgelegt sowie das äußere Zentralrad 26 durch die zweite Schaltkupplung K2 mit einem zur Ausgangswelle 11 drehfesten Antriebssteg 43 verbunden und das innere Zentralrad 25 durch die Antriebsverbindung 39 mit dem vierten Getriebeglied 21 des Summengetriebes 13 gekoppelt. Anstelle einer Schaltkupplung K2 für das zweite Schaltelement kann auch eine Schaltbremse B2 gemäß der Ausführungsform der Fig.3 verwendet werden.

Bei der Ausführungsform der Figur 3 sind der Planetenträger 23 durch das zweite Schaltelement in Form einer Schaltbremse B2 gegenüber einem nichtdrehenden Gehäuseteil 31 undrehbar festlegbar sowie das äußere Zentralrad 26 mit einem Antriebssteg 43 drehfest verbunden, welcher mit einer den Schaltkupplungen K1 und Kc zugeordneten, gegenüber der Ausgangswelle 11 drehfest angeordneten Kupplungstrommel 36 drehfest verbunden ist. Das innere Zentralrad 25 des Umkehrgetriebes 22 und das vierte Getriebeglied 21 des Summengetriebes 13 sind durch die Antriebsverbindung 39 starr aneinander gekettet. Der Planetenträger 23 kann anstatt durch eine Bremse B2 auch unmittelbar mit dem Gehäuseteil 31 ständig fest verbunden sein, wobei für dieses zweite Schaltelement dann eine Schaltkupplung K2 zwischen äußerem Zentralrad 26 und Kupplungstrommel 36 bzw. Ausgangswelle 11 vorzusehen wäre.

Das Summengetriebe 13 ist bei den Ausführungsformen mit Direktgang der Figuren 1 bis 5 wie auch bei den Ausführungsformen der Figuren 6 bis 8 im Prinzip wie folgt gestaltet:

Der Planetenträger 16 weist Doppelplaneten 44 und einen mit der zentralen Zwischenwelle 14 drehfest verbundenen radialen Antriebssteg 49 auf. Die Doppelplaneten 44 bestehen aus je einem Haupt- und Nebenplaneten 45 und 46, welche miteinander kämmen. Die Hauptplaneten 45 weisen einen auf der dem Toroidgetriebe 12 abgewandten Seite des Antriebssteges 49 liegenden ersten Zahnkranz 47 und einen auf der dem Toroidgetriebe 12 zugewandten Seite des Antriebssteges 49 liegenden zweiten Zahnkranz 48 auf. Die Nebenplaneten 46 kämmen mit dem äußeren Zentralrad 20.

Bei den Hauptplaneten 45 der Ausführungsformen der Figuren 1 und 4 bis 8 kämmen der erste Zahnkranz 47 mit dem inneren Zentralrad 21 und der zweite Zahnkranz 48 mit dem inneren Zentralrad 19.
Bei den Hauptplaneten 45 der Ausführungsformen der Figuren 2 und 3 kämmen der erste Zahnkranz 47 mit dem inneren Zentralrad 19 und der zweite Zahnkranz 48 mit dem inneren Zentralrad 21.

Bei den Ausführungsformen der Figuren 1 und 4 bis 7 kämmen die auf der dem Toroidgetriebe 12 zugewandten Seite des Antriebssteges 49 angeordneten Nebenplaneten 46 mit dem zweiten Zahnkranz 48 des zugehörigen Hauptplaneten 45.

Bei den Ausführungsformen der Figuren 2,3 und 8 kämmen die auf der dem Toroidgetriebe 12 abgewandten Seite des Antriebssteges 49 angeordneten Nebenplaneten 46 mit dem ersten Zahnkranz 47 des zugehörigen Hauptplaneten 45.

Die Zahnkränze 47 und 48 der Hauptplaneten 45 haben bei den Ausführungsformen der Figuren 5 und 6 gleiche - dagegen bei den übrigen Ausführungsformen ungleiche Zähnezahlen. Die größere Zähnezahl weist bei den Ausführungsformen der Figuren 1,4,7 und 8 der Zahnkranz 47 - dagegen bei den Ausführungsformen der Figuren 2 und 3 der Zahnkranz 48 auf.

Abweichend von der vorstehend beschriebenen Zähnezahl-Auslegung der Hauptplaneten 45 können die Zahnkränze 47 und 48 bei allen Ausführungsformen der Erfindung auch entweder nur gleiche oder nur ungleiche Zähnezahlen aufweisen.

Bei den Ausführungen der Figuren 6 bis 8 ist das im Kraftfluß der Antriebsverbindung 27 zwischen Schaltkupplung Kc und Ausgangswelle 11 liegende Umkehrgetriebe 22 so ausgebildet, daß ein Stufenplaneten 35 lagernder Planetenträger 23 durch einen radialen Abstützsteg 23a gegenüber einem nichtdrehenden Gehäuseteil undrehbar festgelegt ist. Der die größere Zähnezahl aufweisende und auf der dem Summengetriebe 13 abgewandten Seite des Abstützsteges 23a liegende Zahnkranz 38 der Stufenplaneten 35 kämmt mit einem äußeren Zentralrad 26, welches durch einen radialen Antriebssteg 43 mit der Ausgangswelle 11 drehfest verbunden ist. Der die kleinere Zähnezahl aufweisende und auf der dem Summengetriebe 13 zugewandten Seite des Abstützsteges 23a liegende Zahnkranz 37 der Stufenplaneten 35 kämmt mit einem äußeren Zentralrad 26b, welches durch eine Kupplungstrommel 36 mit den der Ausgangswelle 11 zugeordneten Kupplungshälften der Schaltkupplungen K1 und Kc drehfest verbunden ist.

Die zweite Schaltkupplung K2 ist durch ihre Antriebsverbindung 39 bei den Ausführungen der Figuren 7 und 8 mit einem mit dem jeweils größeren Zahnkranz 38 kämmenden inneren Zentralrad 25 - dagegen bei der Ausführung der Figur 6 mit einem mit dem jeweils kleineren Zahnkranz 37 kämmenden inneren Zentralrad 25b verbunden.

Durch die bei den Ausführungen der Figuren 2 bis 8 verwendete Kupplungstrommel 36 ist eine baulich vorteilhafte Anordnung der Schaltkupplungen K1 und Kc sowie deren Antriebsverbindung zur Ausgangswelle 11 geschaffen, die eine gemeinsame Druckzuführung und Halterung der ausgangsseitigen Kupplungshälften sowie baugleiche Kupplungsstellglieder ermöglicht.

Den acht Ausführungsformen ist folgende Arbeitsweise gemeinsam:

Durch die geared-neutral-Funktion ist beim Anfahrvorgang mit eingerückter erster Schaltkupplung K1 bei ausgerücktem Zustand der zweiten Schaltkupplung K2 bzw. Schaltbremse B2 und der dritten Schaltkupplung Kc die jeweilige Drehzahl der Ausgangswelle 11 und der an die Schaltkupplung K1 unmittelbar angebundenen Getriebeglieder zunächst gleich Null und die Teilübersetzung im Toroidgetriebe 12 auf einen vorbestimmten Wert eingestellt.
In dem sich anschließenden unteren Fahrbereich mit niedrigeren Drehzahlen der Ausgangswelle 11 bleibt die erste Schaltkupplung K1 eingerückt. Die Leistung fließt bei Vorwärtsfahrt über den direkten Pfad der zentralen Zwischenwelle 14 zum Summengetriege 13, wird verzweigt, wobei ein Teil über die erste Schaltkupplung K1 zur Ausgangswelle 11 fließt und der andere Teil über das Toroidgetriebe 12 zur Zwischenwelle 14 bzw. zum Planetenträger des Summengetriebes zurückfließt. In der Getriebe-Anordnung tritt somit Umlaufleistung auf, die Leistung in mindestens einem der Pfade ist höher als die Getriebeeingangsleistung.
Für den Fahrbereichswechsel ist ein Synchron-Punkt einregelbar, bei welchem die Differenzdrehzahl an der zweiten Schaltkupplung K2 bzw. die Drehzahl an der Schaltbremse B2 Null ist, so daß ein ruckfreier Antriebswechsel von der ersten Schaltkupplung K1 auf die zweite Schaltkupplung K2 bzw. die Schaltbremse B2 ermöglicht ist. In diesem oberen Fahrbereich wird die Getriebeeingangsleistung im allgemeinen auf zwei parallele Pfade aufgeteilt, so daß der Leistungsanteil in beiden Pfaden (Toroidgetriebe 12 einerseits und zentrale Zwischenwelle 14 andererseits) kleiner ist als die Getriebeeingangsleistung. Umlaufleistung tritt nicht auf.

Ebenso ist der Synchron-Punkt einregelbar, wenn sich die Wechselgetriebe-Anordnung in der Stellung mit konstanter Gesamt-Übersetzung befindet, d.h., die dritte Schaltkupplung Kc ist eingerückt. Somit ist auch der Antriebswechsel von der Schaltkuplung Kc auf die Schaltkupplung K2 bzw. Schaltbremse B2 des oberen Fahrbereiches ruckfrei durchführbar.

## Patentansprüche

1. Wechselgetriebe-Anordnung, bei der im Kraftfluß zwischen einer zentralen Eingangswelle (10) und einer koaxialen Ausgangswelle (11) ein stufenloses Toroidgetriebe (12) und ein Planetenräder-Summengetriebe (13) angeordnet sind, und mit
- einer zentralen Zwischenwelle (14)
- - die zu der Eingangswelle (10) drehfest angeordnet ist
- einer zentralen Antriebsscheibe (15) des Toroidgetriebes (12)
- - die zu der zentralen Zwischenwelle (14) drehfest angeordnet ist
- einem Planetenträger (16) als ein erstes Getriebeglied des Summengetriebes (12)
- - der zu der zentralen Zwischenwelle (14) drehfest angeordnet ist
- einer konzentrischen Zwischenwelle (17)
- - die zur Eingangswelle (10) koaxial angeordnet ist und von der zentralen Zwischenwelle (14) durchsetzt wird
- einer zentralen Abtriebsscheibe (18 oder 18a) des Toroidgetriebes (12)
- - die zur konzentrischen Zwischenwelle (17) drehfest angeordnet ist
- einem zweiten Getriebeglied (19) des Summengetriebes (13)
- - das zur konzentrischen Zwischenwelle (17) drehfest angeordnet ist
- einem dritten Getriebeglied (20) des Summengetriebes (13)
- einem ersten Schaltelement (Schaltkupplung K1)
- - durch das eine Antriebsverbindung zwischen dem dritten Getriebeglied (20) des Summengetriebes (13) und der Ausgangswelle (11) in einem unteren Fahrbereich mit niedrigeren Fahrgeschwindigkeiten herstellbar ist
- einem vierten Getriebeglied (21) des Summengetriebes (13)
- einem zweiten Schaltelement (Schaltkupplung K2 oder Schaltbremse B2)
- - durch das eine Antriebsverbindung zwischen dem vierten Getriebeglied (21) des Summengetriebes (13) und der Ausgangswelle (11) in einem oberen Fahrbereich mit höheren Fahrgeschwindigkeiten herstellbar ist
- einem dritten Schaltelement (Schaltkupplung Kc)
- - durch welches eine Antriebsverbindung zwischen der Eingangswelle (10) und der Ausgangswelle (11) unter Umgehung des Toroidgetriebes (12) in einem konstanten Gesamt-Übersetzungsverhältnis (i_{G}=const) herstellbar ist.

2. Anordnung nach Patentanspruch 1,
**dadurch gekennzeichnet,**
**daß** das konstante Gesamt-Übersetzungsverhältnis (i_{G}=const) zwischen Ein- und Ausgangswelle (11 u.12) gleich 1 ist.

3. Anordnung nach Patentanspruch 2,
**dadurch gekennzeichnet,**
**daß** das dritte Schaltelement (Schaltkupplung Kc) als direkte Antriebsverbindung zwischen der zentralen Zwischenwelle (14) und der Ausgangswelle (11) ausgebildet ist.

4. Anordnung nach Patentanspruch 2,
**dadurch gekennzeichnet,**
**daß** das dritte Schaltelement (Schaltkupplung Kc) als mittelbare Antriebsverbindung zwischen der zentralen Zwischenwelle (14) und der Ausgangswelle (11) in Form einer Verbindung zwischen dem das erste Getriebeglied des Summengetriebes (13) bildenden Planetenträger (16) und der Ausgangswelle (11) ausgebildet ist.

5. Anordnung nach Patentanspruch 2,
**dadurch gekennzeichnet,**
**daß** im Kraftfluß zwischen dem Summengetriebe (13) und der Ausgangswelle (11) ein Planetenräder-Umkehrgetriebe (22) angeordnet ist, bei dem ein erstes Getriebeglied (23 oder 24) in seinem festgebremsten Zustand zwei weitere Getriebeglieder (25,26 oder 28,29) des Umkehrgetriebes (22) in gegenläufigen Drehsinn zueinander bringt, und bei dem das eine (26 oder 28) der beiden in gegenläufigen Drehsinn zueinander bringbaren Getriebeglieder (25,26 oder 28,29) des Umkehrgetriebes (22) zur Ausgangswelle (11) drehfest angeordnet und das andere (25 oder 29) durch das zweite Schaltelement für den oberen Fahrbereich in Form einer Schaltkupplung (K2) mit dem vierten Getriebeglied (21) des Summengetriebes (13) verbunden ist, und daß das dritte Schaltelement für das konstante Gesamt-Übersetzungsverhältnis zwischen Ein- und Ausgangswelle (10 u.11) in Form einer Schaltkupplung (Kc) in einer Antriebsverbindung zwischen dem das erste Getriebeglied des Summengetriebes (13) bildenden Planetenträger (16) einerseits und dem mit der Ausgangswelle (11) verbundenen Getriebeglied (26 oder 28) des Umkehrgetriebes (22) andererseits angeordnet ist.

6. Anordnung nach Patentanspruch 5,
**dadurch gekennzeichnet,**
**daß** das Umkehrgetriebe (22) als erstes Getriebeglied einen Planetenträger (23) aufweist, dessen Planetenräder (30) mit zwei Zentralrädern (26 u.26a) gleicher Zähnezahl und gleichem Drehsinn sowie mit einem Zentralrad (25) mit anderer Zähnezahl und entgegengesetztem Drehsinn kämmen, daß der Planetenträger (23) des Umkehrgetriebes (22) durch einen radialen Abstützsteg (23a) gegenüber einem nichtdrehenden Gehäuseteil (31) undrehbar festgelegt oder festlegbar ist, daß die beiden Zentralräder (26 u.26a) gleicher Zähnezahl axial auf verschiedenen Seiten des Abstützsteges (23a) angeordnet sind, und daß das eine (26) der beiden Zentralräder (26 u.26a) gleicher Zähnezahl mit der Ausgangswelle (11) unmittelbar - dagegen mit dem als Schaltkupplung (Kc) ausgebildeten dritten Schaltelement für das konstante Gesamt-Übersetzungsverhältnis (i_{G}=const) zwischen Ein- und Ausgangswelle (10 u.11) über das andere (26a) der beiden Zentralräder (26 u.26a) gleicher Zähnezahl mittelbar verbunden ist.

7. Anordnung nach Patentanspruch 5,
**dadurch gekennzeichnet,**
**daß** das Umkehrgetriebe (22) als erstes Getriebeglied ein gegenüber einem nichdrehenden Gehäuseteil (31) undrehbar festgelegtes oder festlegbares Zentralrad (24), einen Doppelplaneten (32) lagernden und mit der Ausgangswelle (11) drehfest verbundenen Planetenträger (28) und ein mit dem als Schaltkupplung (K2) ausgebildeten zweiten Schaltelement für den oberen Fahrbereich verbundenes Zentralrad (29) aufweist, daß die Doppelplaneten (32) aus miteinander kämmenden Einzelplaneten (33 u.34) bestehen, die jeweils mit einem der beiden Zentralräder (24 u.29) kämmen, und daß das als Schaltkupplung (Kc) ausgebildete dritte Schaltelement für die konstante Gesamt-Übersetzung (i_{G}=const) zwischen Ein- und Ausgangswelle (10 u.11) mit dem Planetenträger (28) des Umkehrgetriebes (22) verbunden ist.

8. Anordnung nach Patentanspruch 1,
**dadurch gekennzeichnet,**
**daß** das konstante Gesamt-Übersetzungsverhältnis (i_{G}=const) zwischen Ein- und Ausgangswelle (10 u.11) ungleich 1 ist.

9. Anordnung nach Patentanspruch 5 oder 8,
**dadurch gekennzeichnet,**
**daß** im Kraftfluß zwischen dem Summengetriebe (13) und der Ausgangswelle (11) ein Planetenräder-Umkehrgetriebe (22) angeordnet ist, bei dem ein erstes Getriebeglied (23) in seinem festgebremsten Zustand zwei weitere Getriebeglieder (25 oder 25b u.26) des Umkehrgetriebes (22) in gegenläufigen Drehsinn zueinander bringt, und bei dem das eine (26) der beiden in gegenläufigen Drehsinn zueinander bringbaren Getriebeglieder (25 oder 25b u.26) des Umkehrgetriebes (22) zur Ausgangswelle (11) drehfest angeordnet und das andere (25 oder 25b) mit dem als Schaltkupplung (K2) ausgebildeten zweiten Schaltelement für den oberen Fahrbereich verbunden ist, und daß das dritte Schaltelement für das konstante Gesamt-Übersetzungsverhältnis zwischen Ein- und Ausgangswelle (10 u.11) baulich als Schaltkupplung (Kc) zwischen dem das erste Getriebeglied des Summengetriebes (13) bildenden Planetenträger (16) einerseits und einem vierten Getriebeglied (26b) des Umkehrgetriebes (22) andererseits ausgebildet ist, und daß im Umkehrgetriebe (22) das vierte Getriebeglied (26b) und das mit der Ausgangswelle (11) verbundene Getriebeglied (26) gleichen Drehsinn aufweisen.

10. Anordnung nach Patentanspruch 9,
**dadurch gekennzeichnet,**
**daß** das Umkehrgetriebe (22) als erstes Getriebeglied einen Planetenträger (23) mit wenigstens einem Stufenplaneten (35) aufweist, daß der wenigstens eine Stufenplanet (35) mit zwei Zentralrädern (26 u.26b) gleichen Drehsinnes, jedoch unterschiedlicher Zähnezahl sowie mit einem mit dem als Schaltkupplung (K2) ausgebildeten zweiten Schaltelement für den oberen Fahrbereich verbundenen Zentralrad (25 oder 25b) mit entgegengesetztem Drehsinn kämmt, daß der Planetenträger (23) durch einen radialen Abstützsteg (23a) gegenüber einem nichtdrehenden Gehäuseteil (31) undrehbar festgelegt oder festlegbar ist, daß die beiden Zentralräder (26 u. 26b) gleichen Drehsinnes axial auf verschiedenen Seiten des Abstützsteges (23a) angeordnet sind, und daß das eine (26) der beiden Zentralräder (26 u. 26b) gleichen Drehsinnes mit der Ausgangswelle (11) unmittelbar - dagegen mit dem als Schaltkupplung (Kc) ausgebideten dritten Schaltelement für das konstante Gesamt-Übersetzungsverhältnis (i_{G}=const) zwischen Ein- und Ausgangswelle (10 u.11) über das andere (26b) der beiden Zentralräder (26 u.26b) gleichen Drehsinnes mittelbar verbunden ist.

11. Anordnung nach Patentanspruch 10,
**dadurch gekennzeichnet,**
**daß** das die größere Zähnezahl aufweisende eine (26) der beiden Zentralräder (26 u.26b) gleichen Drehsinnes mit der Ausgangswelle (11) verbunden ist.

12. Anordnung nach Patentanspruch 10 oder 11
**dadurch gekennzeichnet,**
**daß** der wenigstens eine Stufenplanet (35) mit seinem die kleinere Zähnezahl aufweisenden Zahnkranz (37) mit demjenigen Zentralrad (25b) kämmt, das mit dem als Schaltkupplung (K2) ausgebildeten zweiten Schaltelement für den oberen Fahrbereich verbunden ist.

13. Anordnung nach Patentanspruch 10 oder 11,
**dadurch gekennzeichnet,**
**daß** der wenigstens eine Stufenplanet (35) mit seinem die größere Zähnezahl aufweisenden Zahnkranz (38) mit demjenigen Zentralrad (25) kämmt, das mit dem als Schaltkupplung (K2) ausgebildeten zweiten Schaltelement für den oberen Fahrbereich verbunden ist.

14. Anordnung nach einem der Patentansprüche 1,2 und 4 bis 13,
**dadurch gekennzeichnet,**
**daß** eine zylindrische Kupplungstrommel (36) sowohl eine ständige Antriebsverbindung (27 oder 27a) mit der Ausgangswelle (11) aufweist als auch das Summengetriebe (13) umschließend und konzentrisch zu diesem angeordnet ist, und
**daß** die der Ausgangswelle (11) zugeordneten Kupplungshälften sowohl des als Schaltkupplung (K1) ausgebildeten ersten Schaltelementes für den unteren Fahrbereich als auch des als Schaltkupplung (Kc) ausgebildeten dritten Schaltelementes für die konstante Gesamt-Übersetzung (i_{G}=const) zwischen Ein- und Ausgangswelle (10 u.11) an der Kupplungstrommel (36) drehfest gehaltert sind.

## Claims

1. Transmission arrangement, in which a continuously variable toroidal transmission (12) and a planetary aggregating transmission (13) are arranged in the power flow between a central input shaft (10) and a coaxial output shaft (11), and comprising
- a central intermediate shaft (14)
-- which is non-rotatably arranged with respect to the input shaft (10)
- a central drive disc (15) of the toroidal transmission (12)
-- which is non-rotatably arranged with respect to the central intermediate shaft (14)
- a planet carrier (16) as a first transmission member of the aggregating transmission (12)
-- which is non-rotatably arranged with respect to the central intermediate shaft (14)
- a concentric intermediate shaft (17)
-- which is arranged coaxially with respect to the input shaft (10) and is penetrated by the central intermediate shaft (14)
- a central driven disc (18 or 18a) of the toroidal transmission (12)
-- which is non-rotatably arranged with respect to the concentric intermediate shaft (17)
- a second transmission member (19) of the aggregating transmission (13)
-- which is non-rotatably arranged with respect to the concentric intermediate shaft (17)
- a third transmission member (20) of the aggregating transmission (13)
- a first shifting element (clutch K1)
-- by means of which a drive connection between the third transmission member (20) of the aggregating transmission (13) and the output shaft (11) can be produced in a lower driving range with lower driving speeds
- a fourth transmission member (21) of the aggregating transmission (13)
- a second shifting element (clutch K2 or shift brake B2)
-- by means of which a drive connection between the force transmission member (21) of the aggregating transmission (13) and the output shaft (11) can be produced in an upper driving range with higher driving speeds
- a third shifting element (clutch Kc)
-- by means of which a drive connection between the input shaft (10) and the output shaft (11) can be produced while bypassing the toroidal transmission (12) in a constant overall transmission ratio (i_{G} = const).

2. Arrangement according to claim 1, **characterised in that** the constant overall transmission ratio (i_{G} = const) between the input and output shaft (11 and 12) is equal to 1.

3. Arrangement according to claim 2, **characterised in that** the third shifting element (clutch Kc) is configured as a direct drive connection between the central intermediate shaft (14) and the output shaft (11).

4. Arrangement according to claim 2, **characterised in that** the third shifting element (clutch Kc) is configured as an indirect drive connection between the central intermediate shaft (14) and the output shaft (11) in the form of a connection between the planet carrier (16) forming the first transmission member of the aggregating transmission (13) and the output shaft (11).

5. Arrangement according to claim 2, **characterised in that** a planetary reversing transmission (22) is arranged in the power flow between the aggregating transmission (13) and the output shaft (11), in which planetary reversing transmission a first transmission element (23 or 24) in its rigidly braked state brings two further transmission members (25, 26 or 28, 29) of the reversing transmission (22) into opposite directions of rotation to one another, and in which one (26 or 28) of the two transmission members (25, 26 or 28, 29) of the reversing transmission (22) which can be made to rotate in opposite directions to one another is non-rotatably arranged with respect to the output shaft (11) and the other (25 or 29) is connected by the second shifting element for the upper driving range in the form of a clutch (K2) to the fourth transmission member (21) of the aggregating transmission (13), and **in that** the third shifting element for the constant overall transmission ratio is arranged between the input and output shaft (10 and 11) in the form of a clutch (Kc) in a drive connection between the planet carrier (16), on the one hand, forming the first transmission member of the aggregating transmission (13) and the transmission member (26 or 28) of the reversing transmission (22), on the other hand, which is connected to the output shaft (11).

6. Arrangement according to claim 5, **characterised in that** the reversing transmission (22) has a planet carrier (23) as the first transmission member, the planet gears (30) of which mesh with two central gears (26 and 26a) with the same number of teeth and the same direction of rotation, and with a central gear (25) with a different number of teeth and the opposite direction of rotation, **in that** the planet carrier (23) of the reversing transmission (22) is fixed or can be fixed so as to be non-rotatable relative to a non-rotating housing part (31) by a radial support web (23a), **in that** the two central gears (26 and 26a) with the same number of teeth are arranged axially on different sides of the support web (23a), and **in that** one (26) of the two central gears (26 and 26a) with the same number of teeth is connected directly to the output shaft (11) but, on the other hand, is connected indirectly to the third shifting element configured as a clutch (Kc) for the constant overall transmission ratio (i_{G} = const) between the input and output shaft (10 and 11), via the other (26a) of the two central gears (26 and 26a) with the same number of teeth.

7. Arrangement according to claim 5, **characterised in that** the reversing transmission (22) has, as the first transmission member, a central gear (24) which is non-rotatably fixed or can be fixed relative to a non-rotating housing part (31), a planet carrier (28) mounting double planets and non-rotatably connected to the output shaft (11) and a central gear (29) connected to the second shifting element configured as a clutch (K2) for the upper driving range, **in that** the double planets (32) consist of mutually meshing individual planets (33 and 34), which each mesh with one of the two central gears (24 and 29), and **in that** the third shifting element configured as a clutch (Kc) for the constant overall transmission (i_{G} = const) between the input and output shaft (10 and 11) is connected to the planet carrier (28) of the reversing transmission (22).

8. Arrangement according to claim 1, **characterised in that** the constant overall transmission ratio (i_{G} = const) between the input and output shaft (10 and 11) does not equal 1.

9. Arrangement according to claim 5 or 8, **characterised in that** a planetary reversing transmission (22) is arranged in the power flow between the aggregating transmission (13) and the output shaft (11), in which planetary reversing transmission a first transmission member (23) in its rigidly braked state brings two further transmission members (25 or 25b and 26) of the reversing transmission (22) into opposite directions of rotation to one another, and in which one (26) of the two transmission members (25 or 25b and 26) of the reversing transmission (22) which can be made to rotate in opposite directions to one another is non-rotatably arranged with respect to the output shaft (11) and the other (25 or 25b) is connected to the second shifting element configured as a clutch (K2) for the upper driving range, and **in that** the third shifting element for the constant overall transmission ratio between the input and output shaft (10 and 11) is structurally configured as a clutch (Kc) between the planet carrier (16) forming the first transmission member of the aggregating transmission (13), on the one hand, and a fourth transmission member (26b) of the reversing transmission (22), on the other hand, and **in that** the fourth transmission member (26b) and the transmission member (26) connected to the output shaft (11) in the reversing transmission (22) have the same direction of rotation.

10. Arrangement according to claim 9, **characterised in that** the reversing transmission (22) has a planet carrier (23), as the first transmission member, with at least one stepped planet gear (35), **in that** the at least one stepped planet gear (35) meshes with two central gears (26 and 26b) with the same direction of rotation, but with a different number of teeth, and with a central gear (25 or 25b) connected to the second shifting element configured as a clutch (K2) for the upper driving range and with the opposite direction of rotation, **in that** the planet carrier (23) is non-rotatably fixed or can be fixed by a radial support web (23a) relative to a non-rotating housing part (31) **in that** the two central gears (26 and 26b) with the same direction of rotation are arranged axially on different sides of the support web (23a), and **in that** one (26) of the two central gears (26 and 26b) with the same direction of rotation is directly connected to the output shaft (11), but, on the other hand, is indirectly connected to the third shifting element configured as a clutch (Kc) for the constant overall transmission ration (i_{G} = const) between the input and output shaft (10 and 11) via the other (26b) of the two central gears (26 and 26b) with the same direction of rotation.

11. Arrangement according to claim 10, **characterised in that** the one (26) of the two central gears (26 and 26b) with the same direction of rotation having the larger number of teeth is connected to the output shaft (11).

12. Arrangement according to claim 10 or 11, **characterised in that** the at least one stepped planet gear (35) with its gear ring (37) having the smaller number of teeth meshes with the central gear (25b) which is connected to the second shifting element configured as a clutch (K2) for the upper driving range.

13. Arrangement according to claim 10 or 11, **characterised in that** the at least one stepped planet gear (35) with its gear ring (38) having the larger number of teeth meshes with the central gear (25) which is connected to the second shifting element configured as a clutch (K2) for the upper driving range.

14. Arrangement according to any one of claims 1, 2 and 4 to 13, **characterised in that** a cylindrical clutch drum (36) has a constant drive connection (27 or 27a) with the output shaft (11) and is also arranged so as to surround the aggregating transmission (13) and concentrically thereto, and **in that** the clutch halves associated with the output shaft (11), both of the first shifting element configured as a clutch (K1) for the lower driving range and of the third shifting element configured as a clutch (Kc) for the constant overall transmission (i_{G} = const) are non-rotatably held between the input and output shaft (10 and 11) on the clutch drum (36).

## Revendications

1. Dispositif de transmission dans lequel une transmission toroïdale à réglage continu (12) et une transmission d'adjonction à roues planétaires (13) sont disposées dans le flux de force entre un arbre d'entrée central (10) et un arbre de sortie coaxial (11), et avec
- un arbre intermédiaire central (14)
-- qui est disposé sur l'arbre d'entrée (10) de manière à résister à la rotation
- un disque menant central (15) de la transmission toroïdale (12)
-- qui est disposé sur l'arbre intermédiaire central (14) de manière à résister à la rotation
- un support de planétaires (16) comme premier élément de transmission de la transmission d'adjonction (13)
-- qui est disposé sur l'arbre intermédiaire central (14) de manière à résister à la rotation
- un arbre intermédiaire concentrique (17)
-- qui est disposé coaxialement à l'arbre d'entrée (10) et qui est traversé par l'arbre intermédiaire central (14)
- un disque mené central (18 ou 18a) de la transmission toroïdale (12)
-- qui est disposé sur l'arbre intermédiaire concentrique (17) de manière à résister à la rotation
- un deuxième élément de transmission (19) de la transmission d'adjonction (13)
-- qui est disposé sur l'arbre intermédiaire concentrique (17) de manière à résister à la rotation
- un troisième élément de transmission (20) de la transmission d'adjonction (13)
- un premier élément de changement de vitesse (embrayage K1)
-- au moyen duquel une liaison d'entraînement peut être établie entre le troisième élément de transmission (20) de la transmission d'adjonction (13) et l'arbre de sortie (11) dans un rayon d'action inférieur avec des vitesses de fonctionnement plus faibles
- un quatrième élément de transmission (21) de la transmission d'adjonction (13)
- un deuxième élément de changement de vitesse (embrayage K2 ou frein de commande B2)
-- au moyen duquel une liaison d'entraînement peut être établie entre le quatrième élément de transmission (21) de la transmission d'adjonction (13) et l'arbre de sortie (11) dans un rayon d'action supérieur avec des vitesses de fonctionnement plus élevées
- un troisième élément de changement de vitesse (embrayage Kc)
-- au moyen duquel une liaison d'entraînement peut être établie entre l'arbre d'entrée (10) et l'arbre de sortie (11) en contournant la transmission toroïdale (12) selon un rapport de transmission total constant (i_{G} = const).

2. Dispositif selon la revendication 1,
**caractérisé en ce que**
le rapport de transmission total constant (i_{G} = const) entre l'arbre d'entrée et l'arbre de sortie (10 et 11) est égal à 1.

3. Dispositif selon la revendication 2,
**caractérisé en ce que**
le troisième élément de changement de vitesse (embrayage Kc) est configuré comme liaison d'entraînement directe entre l'arbre intermédiaire central (14) et l'arbre de sortie (11).

4. Dispositif selon la revendication 2,
**caractérisé en ce que**
le troisième élément de changement de vitesse (embrayage Kc) est configuré comme liaison d'entraînement indirecte entre l'arbre intermédiaire central (14) et l'arbre de sortie (11) sous forme d'une liaison entre le support de planétaires (16) formant le premier élément de transmission de la transmission d'adjonction (13) et l'arbre de sortie (11).

5. Dispositif selon la revendication 2,
**caractérisé en ce que**
une transmission de renversement à roues planétaires (22) est disposée dans le flux de force entre la transmission d'adjonction (13) et l'arbre de sortie (11), dans laquelle un premier élément de transmission (23 ou 24), à l'état bloqué, met en rotation dans le sens inverse l'un de l'autre deux autres éléments de transmission (25, 26 ou 28, 29) de la transmission de renversement (22) et dans laquelle l'un (26 ou 28) des deux éléments de transmission (25, 26 ou 28, 29) de la transmission de renversement (22) qui peuvent être mis en rotation dans le sens inverse l'un de l'autre est disposé sur l'arbre de sortie (11) de manière à résister à la rotation et l'autre (25 ou 29) élément est relié au quatrième élément de transmission (21) de la transmission d'adjonction (13) par le deuxième élément de changement de vitesse pour le rayon d'action supérieur sous la forme d'un embrayage (K2), et **en ce que** le troisième élément de changement de vitesse pour le rapport de transmission total constant est disposé entre l'arbre d'entrée et l'arbre de sortie (10 et 11) sous la forme d'un embrayage (Kc) dans une liaison d'entraînement entre le support de planétaires (16) formant le premier élément de transmission de la transmission d'adjonction (13), d'une part, et l'élément de transmission (26 ou 28) de la transmission de renversement (22) relié à l'arbre de sortie (11), d'autre part.

6. Dispositif selon la revendication 5,
**caractérisé en ce que**
la transmission de renversement (22) comporte comme premier élément de transmission un support de planétaires (23) dont les roues planétaires (30) s'engrènent avec deux roues centrales (26 et 26a) comportant le même nombre de dents et présentant le même sens de rotation ainsi qu'avec une roue centrale (25) comportant un autre nombre de dents et présentant un sens de rotation inverse, **en ce que** le support de planétaires (23) de la transmission de renversement (22) est fixé ou peut être fixé de manière non rotative par rapport à une partie de carter non rotative (31) par l'intermédiaire d'une traverse d'appui radiale (23a), **en ce que** les deux roues centrales (26 et 26a) comportant le même nombre de dents sont disposées axialement sur différents côtés de la traverse d'appui radiale (23a), et **en ce que** l'une des deux roues centrales (26 et 26a) comportant le même nombre de dents est reliée directement à l'arbre de sortie (11) - par contre indirectement au troisième élément de changement de vitesse pour le rapport de transmission total constant (i_{G} = const) configuré sous la forme d'un embrayage (Kc) entre l'arbre d'entrée et l'arbre de sortie (10 et 11) par l'intermédiaire de l'autre roue (26a) des deux roues centrales (26 et 26a) comportant le même nombre de dents.

7. Dispositif selon la revendication 5,
**caractérisé en ce que**
la transmission de renversement (22) comporte comme premier élément de transmission une roue centrale (24) fixée ou qui peut être fixée de manière non rotative par rapport à une partie de carter non rotative (31), un support de planétaires (28) recevant des planétaires doubles (32) et relié à l'arbre de sortie (11) de manière à résister à la rotation et une roue centrale (29) reliée au deuxième élément de changement de vitesse pour le rayon d'action supérieur configuré comme l'embrayage (K2), **en ce que** les planétaires doubles (32) sont constitués de planétaires individuels (33 et 34) s'engrenant les uns dans les autres qui s'engrènent chacun avec l'une des deux roues centrales (24 et 29), et **en ce que** le troisième élément de changement de vitesse configuré comme l'embrayage (Kc) pour le rapport de transmission total constant (i_{G} = const) est relié au support de planétaires (28) de la transmission de renversement (22) entre l'arbre d'entrée et l'arbre de sortie (10 et 11).

8. Dispositif selon la revendication 1,
**caractérisé en ce que**
le rapport de transmission total constant (i_{G} = const) entre l'arbre d'entrée et l'arbre de sortie (10 et 11) n'est pas égal à 1.

9. Dispositif selon la revendication 5 ou 8,
**caractérisé en ce que**
une transmission de renversement à roues planétaires (22) est disposée dans le flux de force entre la transmission d'adjonction (13) et l'arbre de sortie (11), dans laquelle un premier élément de transmission (23), à l'état bloqué, met en rotation dans le sens inverse l'un de l'autre deux autres éléments de transmission (25 ou 25b et 26) de la transmission de renversement (22) et dans laquelle l'un (26) des deux éléments de transmission (25 ou 25b et 26) de la transmission de renversement (22) qui peuvent être mis en rotation dans le sens inverse l'un de l'autre est disposé sur l'arbre de sortie (11) de manière à résister à la rotation et l'autre (25 ou 25b) élément est relié au deuxième élément de changement de vitesse pour le rayon d'action supérieur sous la forme d'un embrayage (K2), et **en ce que** le troisième élément de changement de vitesse pour le rapport de transmission total constant est disposé entre l'arbre d'entrée et l'arbre de sortie (10 et 11) sous la forme d'un embrayage (Kc) entre le support de planétaires (16) formant le premier élément de transmission de la transmission d'adjonction (13), d'une part, et un quatrième élément de transmission (26b) de la transmission de renversement (22), d'autre part, et **en ce que**, dans la transmission de renversement (22), le quatrième élément de transmission (26b) et l'élément de transmission (26) relié à l'arbre de sortie (11) présentent le même sens de rotation.

10. Dispositif selon la revendication 9,
**caractérisé en ce que**
la transmission de renversement (22) comporte comme premier élément de transmission un support de planétaires (23) avec au moins un planétaire à gradins (35), **en ce que** le au moins un planétaire à gradins (35) s'engrène avec deux roues centrales (26 et 26b) présentant le même sens de rotation, mais comportant un nombre de dents différent, ainsi qu'avec une roue centrale (25 ou 25b) présentant un sens de rotation inverse, reliée au deuxième élément de changement de vitesse pour le rayon d'action supérieur configuré comme un embrayage (K2), **en ce que** le support de planétaires (23) est fixé ou peut être fixé de manière non rotative par rapport à une partie de carter non rotative (31) par l'intermédiaire d'une traverse d'appui radiale (23a), **en ce que** les deux roues centrales (26 et 26b) présentant le même sens de rotation sont disposées axialement sur différents côtés de la traverse d'appui radiale (23a), et **en ce que** l'une (26) des deux roues centrales (26 et 26b) présentant le même sens de rotation est reliée directement à l'arbre de sortie (11) - par contre indirectement au troisième élément de changement de vitesse pour le rapport de transmission total constant (i_{G} = const) configuré sous la forme d'un embrayage (Kc) entre l'arbre d'entrée et l'arbre de sortie (10 et 11) par l'intermédiaire de l'autre roue (26b) des deux roues centrales (26 et 26b) présentant le même sens de rotation.

11. Dispositif selon la revendication 10,
**caractérisé en ce que**
l'une (26) des deux roues centrales (26 et 26b) présentant le même sens de rotation et comportant le plus grand nombre de dents est reliée à l'arbre de sortie (11).

12. Dispositif selon la revendication 10 ou 11,
**caractérisé en ce que**
le au moins un planétaire à gradins (35) s'engrène avec sa couronne dentée (37) comportant le plus petit nombre de dents avec la roue centrale (25b) qui est reliée au deuxième élément de changement de vitesse pour le rayon d'action supérieur configuré comme un embrayage (K2).

13. Dispositif selon la revendication 10 ou 11,
**caractérisé en ce que**
le au moins un planétaire à gradins (35) s'engrène avec sa couronne dentée (38) comportant le plus grand nombre de dents avec la roue centrale (25) qui est reliée au deuxième élément de changement de vitesse pour le rayon d'action supérieur configuré comme un embrayage (K2).

14. Dispositif selon l'une quelconque des revendications 1, 2 et 4 à 13,
**caractérisé en ce que**
non seulement un tambour d'embrayage cylindrique (36) comporte une liaison d'entraînement permanente (27 ou 27a) avec l'arbre de sortie (11), mais, de plus, la transmission d'adjonction (13) est disposée de manière à l'entourer concentriquement, et **en ce que** les moitiés d'embrayage associées à l'arbre de sortie (11) aussi bien du premier élément de changement de vitesse configuré comme un embrayage (K1) pour le rayon d'action inférieur que du troisième élément de changement de vitesse configuré comme un embrayage (Kc) pour la transmission totale constante (i_{G} = const) sont fixées sur le tambour d'embrayage (36) de manière à résister à la rotation entre l'arbre d'entrée et l'arbre de sortie (10 et 11).
